# EUROPEAN PATENT APPLICATION

(11) **EP 1 708 331 A2**
(43) Date of publication of application: **04.10.2006**
(21) Application number: 06111950.9
(22) Date of filing: 29.03.2006
(51) Int. Cl.: H02H 3/13, H04N 5/63, H01R 13/66

(54) **Device for connecting electric household appliances to an electric power mains**

(30) Priority: 30.03.2005 IT MI20050521
(71) Applicant: PIRCAR S.r.l., 23013 Cosio Valtellino (IT)
(72) Inventor: Pirondini, Giovanni, 23100 Sondrio (IT); Caratti, Eugenio, 23020 Prata Camportaccio (IT)
(74) Representative: Jorio, Paolo

(57) **Abstract**

A device for connecting electric household appliances to an electric power mains (3) has an input line (5) connectable to a terminal (2) of an electric power mains (3); and at least one output terminal (7). The connecting device also has a detection stage (11) for detecting electric power drawn by the input line (5); and a selective coupling stage (10) between the input line (5) and the output terminal (7). The selective coupling stage (10) is controlled by the detection stage (11) to disconnect the output terminal (7) from the input line (5) when the detected electric power is below a predetermined threshold (S_{THN}).

## Description

The present invention relates to a device for connecting electric household appliances to an electric power mains.

As is known, many currently marketed electric household appliances are designed to remain in an energy-saving or standby configuration when not in use. In this configuration, the appliance is still powered, but the electricity drawn from the mains is reduced to the absolute minimum necessary to restore normal operation rapidly when required. Most remote-controlled appliances, for example, such as televisions or stereo systems, have a standby configuration, so they can be turned back on using the remote control, as opposed to manually reconnecting the appliance to the mains using the on/off switch.

In the standby configuration, the appliance must still be connected permanently to the electric power mains, which poses serious drawbacks, also in view of the fact that most appliances are left in the energy-saving configuration for many consecutive hours a day and very often unattended. In particular, the appliance is exposed to mains surge caused, for example, by malfunctions or lightning; and wear or faults in continuously powered component parts of the appliance may cause serious damage, or even fires, as a result of overheating. Apart from the safety aspect, another important point to bear in mind is that, though reduced, power draw in the standby configuration is not nil, and often amounts to a few tens of watts. And, since most homes normally have numerous electric appliances, which may be left in the standby configuration for many hours a day, total consumption is other than negligible.

It is an object of the present invention to provide a connecting device designed to eliminate the aforementioned drawbacks.

According to the present invention, a device for connecting electric household appliances to an electric power mains is provided, as claimed in Claim 1.

Some non-limiting embodiments of the invention will be described by way of example with reference to the accompanying drawings, in which:
Figure 1 shows a simplified view in perspective of a first embodiment of a connecting device in accordance with the present invention in use;
Figure 2 shows a simplified block diagram of the Figure 1 connecting device;
Figures 3 and 4 show simplified block diagrams of connecting devices in accordance with a second and third embodiment, respectively, of the present invention.

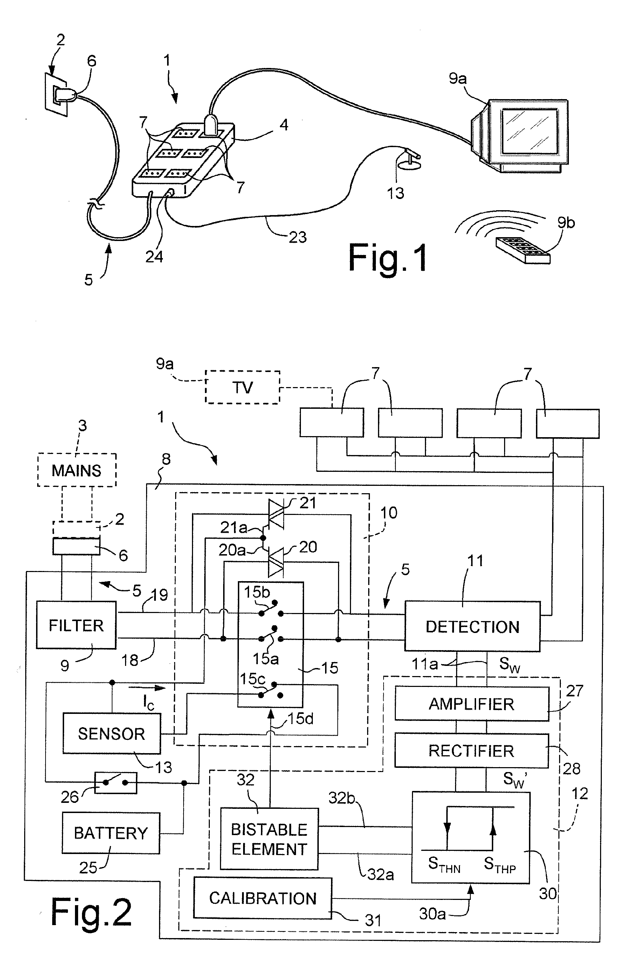

As shown in Figures 1 and 2, the reference number 1 indicates a multiple safety socket for simultaneously connecting a number of electric household appliances to a terminal 2 of an electric power mains 3.

Multiple socket 1 comprises a casing 4; an input line 5 connectable to terminal 2 of mains 3 by means of a plug 6; a number of output terminals 7 incorporated in casing 4; and a safety circuit 8 housed in casing 4 and connected between input line 5 and output terminals 7.

Plug 6 and output terminals 7 are standard types to current standards. Various types of household appliances are connected to respective output terminals 7 of multiple socket 1. More specifically, Figure 1 shows a television 9a equipped with an infrared remote-control device 9b.

Safety circuit 8 comprises a noise filter 9; a selective coupling stage 10 between input line 5 and output terminals 7; a power detection stage 11; a driving stage 12; and an electromagnetic signal sensor 13.

Selective coupling stage 10 is controlled by power detection stage 11 via driving stage 12, as explained below, and comprises a three-contact relay 15. A first and second contact 15a, 15b of relay 15 are connected respectively along a first and second conductor 18, 19 (phase and neutral) of input line 5, downstream from noise filter 9, and are normally open (i.e. are open when relay 15 is not energized). In other words, first and second contact 15a, 15b respectively define a first and second switch, which are connected along first and second conductor 18, 19 and isolate terminals 7 from input line 5 when relay 15 is not energized. A normally-closed third contact 15c is connected between electromagnetic signal sensor 13 and a battery 25, which supplies it as explained below.

A first and second triac thyristor 20, 21 are connected in parallel to first and second contact 15a, 15b respectively of relay 15, and are controlled by electromagnetic signal sensor 13.

More specifically, electromagnetic signal sensor 13 is an infrared receiver outside casing 4 of multiple socket 1 and connected to respective control terminals 20a, 21a of first and second triac thyristors 20, 21 by a connecting cable 23 and a connector 24. More specifically, electromagnetic signal sensor 13 is of a type suitable for picking up signals emitted by infrared remote controls, and is also powered by independent battery 25. In the presence of a signal emitted by an infrared remote control, electromagnetic signal sensor 13 supplies a control current I_{c} to control terminals 20a, 21a of triac thyristors 20, 21, which conduct. In an alternative embodiment, electromagnetic signal sensor 13 is a radiofrequency receiver; and a further embodiment comprises a number of infrared and/or radiofrequency electromagnetic signal sensors. Battery 25 may be connected temporarily to control terminals 20a, 21a of triac thyristors 20, 21 by a normally-open manual reset switch 26.

Detection stage 11 is cascade connected to selective coupling stage 10, and measures the electric power drawn over input line 5 by the loads connected to output terminals 7. For which purpose, outputs 11a of detection stage 11 are connected to the driving stage 12, and supply a measurement signal S_{w} correlated to the power drawn. In other words, selective coupling stage 10 is connected between input line 5 and detection stage 11, so that detection stage 11 and driving stage 12 are also disconnected from input line 5 when input line 5 is disconnected from output terminals 7.

Driving stage 12 comprises an amplifier 27, a rectifier 28, a comparator 30, a calibration circuit 31, and a bistable - in this case, a set/reset - element 32.

Amplifier 27, rectifier 28, and comparator 30 are cascade connected to one another. More specifically, amplifier 27 has inputs connected to the outputs of detection stage 11 to receive measurement signal S_{w}, and outputs connected to rectifier 28, which is preferably a double half-wave type. Comparator 30 is a hysteresis, trigger threshold type, e.g. a Schmitt trigger, and has a rise trigger threshold S_{THP} and a fall trigger threshold S_{THN}. Comparator 30 receives the amplified, rectified measurement signal S_{w}' from rectifier 28, and switches when measurement signal S_{w}' runs below the fall trigger threshold S_{THN} or exceeds the rise trigger threshold S_{THP}. Outputs of comparator 30, at which opposite voltage values are present, are connected respectively to a set input 32a and a reset input 32b of bistable element 32, which has an output connected to a control terminal 15d of relay 15. More specifically, when the amplified, rectified measurement signal S_{w}' exceeds rise threshold S_{THP}, the set input 32a of bistable element 32 is forced to a high value, and the output of bistable element 32 is high and energizes relay 15, so that first and second contact 15a, 15b close or remain closed; the third contact 15c, on the other hand, is open, so that electromagnetic signal sensor 13 is not powered to save battery 25. Conversely, when the amplified, rectified measurement signal S_{w}' is below fall threshold S_{THN}, the reset input 32b of bistable element 32 is forced to a high value, so that the output of bistable element 32 is low. In which case, relay 15 is not energized, so that first and second contact 15a, 15b are open, while third contact 15c closes to connect battery 25 to electromagnetic signal sensor 13.

Calibration circuit 31 is connected to a calibration terminal 30a of comparator 30 to regulate rise and fall trigger thresholds S_{THP}, S_{THN} thereof. More specifically, calibration is carried out so that the amplified, rectified measurement signal S_{W}' is below fall trigger threshold S_{THN} when all the user devices connected to output terminals 7 of multiple socket 1 (in the example shown, television 9a) are in the energy-saving or standby configuration.

Multiple socket 1 operates as follows. When at least one of the user devices connected to output terminals 7 is operating, the power draw measured by detection stage 11 is sufficient for the amplified, rectified measurement signal S_{W}' to exceed rise threshold S_{THP} of comparator 30, so that the output of bistable element 32 is high and energizes relay 15. The first and second contact 15a, 15b remain closed, and keep output terminals 7 connected to input line 5, and therefore to mains 3, so that television 9a and any other user devices connected to multiple socket 1 can operate normally.

When television 9a and all the user devices connected to multiple socket 1 are set to the standby configuration, detection stage 11 detects such a fall in power draw from mains 3 that the amplified, rectified measurement signal S_{w}' runs below fall trigger threshold S_{THN}; comparator 30 and bistable element 32 switch, thus de-energizing relay 15; the first and second contact 15a, 15b therefore open; the connection between output terminals 7 and input line 5 is thus cut off; and the user devices connected to multiple socket 1 are isolated from mains 3, while the electromagnetic signal sensor is powered.

When activation of one of the user devices is requested by use of the respective remote control (in particular, television 9a using remote control 9b), electromagnetic signal sensor 13 picks up the signal (infrared) emitted by the remote control, and, in response, supplies control current I_{c} to control terminals 20a, 21a of triac thyristors 20, 21; triac thyristors 20, 21 are temporarily turned on and establish conducting paths parallel to relay 15; output terminals 7 are therefore reconnected to input line 5 to power the user devices; the power draw is detected by detection stage 11, which closes relay 15 via driving stage 12, as explained above; and, at this point, output terminals 7 and input line 5 remain permanently connected even if triac thyristors 20, 21 are disabled again, when third contact 15c opens to cut off power to electromagnetic signal sensor 13. Alternatively, input line 5 and output terminals 7 may be reconnected using manual reset switch 26 to connect battery 25 to control terminals 20a, 21a of triac thyristors 20, 21.

In other words, the power draw of at least one active user device keeps input line 5 and output terminals 7 connected; when the power draw level indicates all the user devices connected to multiple socket 1 are in the standby configuration, output terminals 7 are automatically disconnected from input line 5 and remain isolated. The user devices connected to multiple socket 1 are therefore advantageously protected against overloads on mains 3, and power draw is zeroed. Moreover, detection stage 11 and driving stage 12 are also disconnected from mains 3 and surge-protected when none of the user devices connected to multiple socket 1 is actively in use. Simply operating the remote control of any one of the user devices connected to multiple socket 1, however, - in particular, remote control 9b of television 9a - is sufficient to reconnect input line 5 and output terminals 7 and activate the relative user device. Multiple socket 1 therefore maintains the advantages of the standby configuration, and in particular the possibility of rapidly reactivating the user devices connected to multiple socket 1.

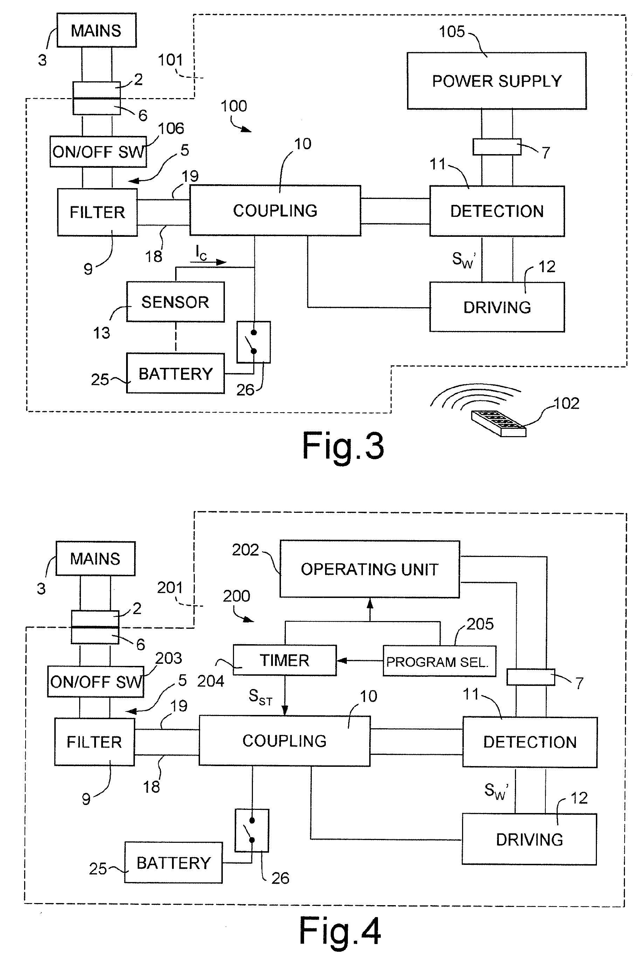

Figure 3, in which parts identical to those already described are indicated using the same reference numbers, shows a second embodiment of the invention. In this case, a device 100 for connection to terminal 2 of electric power mains 3 is incorporated in a household appliance 101 equipped with a remote control 102, such as a television, audio amplifier, CD or DVD player, video recorder, tuner, and similar. Connecting device 100 comprises input line 5 connectable to terminal 2 by plug 6; an output terminal 7; filter 9; selective coupling stage 10; detection stage 11; driving stage 12; and electromagnetic signal sensor 13 with battery 25. Output terminal 7 is arranged inside the appliance 101 and connected to a power supply 105 of the appliance. Electromagnetic signal sensor 13 is preferably the same one used for normal operation of appliance 101, which also has an on/off switch 106 distinct from manual reset switch 26.

In a further embodiment of the invention shown in Figure 4, a device 200 for connection to terminal 2 of electric power mains 3 is incorporated in a household appliance 201, such as a washing machine or dishwasher. In this case too, connecting device 200 comprises input line 5, an output terminal 7, filter 9, selective coupling stage 10, detection stage 11, driving stage 12, and manual reset switch 26. In addition to connecting device 200, appliance 201 comprises an operating unit 202 (e.g. comprising one or more motors, pumps, thermostats, heaters, etc.); an on/off switch 203 connected along input line 5; a timer 204 associated with operating unit 202 and powered by battery 25; and a program selector 205 connected to operating unit 202 and timer 204 to select one of a number of available operating modes in known manner (e.g. wash time, duration and temperature). Program selector 205 is designed to set appliance 200 to the standby configuration when no program is being performed, and in particular pending performance of a delayed program or upon completion of a given program. Selection of one of the programs activates timer 204. At the time set to perform the selected program, timer 204 supplies a start signal S_{ST} to selective coupling stage 10, and in particular to the control terminals of the triac thyristors (not shown here).

Clearly, changes may be made to the connecting device as described herein without, however, departing from the scope of the present invention as defined in the accompanying Claims.

## Claims

1. A device for connecting electric household appliances to an electric power mains (3), comprising:
an input line (5) connectable to a terminal (2) of an electric power mains (3); and
at least one output terminal (7);
**characterized in that** it comprises detection means (11) for detecting electric power drawn by the input line (5); and
selective coupling means (10) between the input line (5) and the output terminal (7), controlled by the detection means (11) to disconnect the output terminal (7) from the input line (5) when the detected electric power is below a predetermined threshold (S_{THN}).

2. A device as claimed in Claim 1, wherein the selective coupling means (10) are connected between the input line (5) and the detection means (11), so that the detection means (11) are disconnected from the input line (5) when the input line (5) is disconnected from the output terminal (7).

3. A device as claimed in Claim 2, wherein the input line (5) comprises a first conductor (18) and a second conductor (19), and the selective coupling means (11) comprise a first switch (15a) and a second switch (15b) connected respectively along the first conductor (18) and the second conductor (19) and controlled by the detection means (11).

4. A device as claimed in Claim 2 or 3, and comprising at least one electromagnetic signal sensor (13) associated with the selective coupling means (11) to connect the input line (5) and the output terminal (7) upon receiving an external electromagnetic signal.

5. A device as claimed in Claim 4, wherein the electromagnetic signal sensor (13) is an infrared receiver.

6. A device as claimed in Claim 4, wherein the electromagnetic signal sensor (13) is a radiofrequency receiver.

7. A device as claimed in any one of Claims 4 to 6, wherein the selective coupling means (10) comprise a first triac thyristor (20) and a second triac thyristor (21) connected in parallel to the first switch (15a) and the second switch (15b) respectively, and controlled by the electromagnetic signal sensor (13).

8. A device as claimed in Claim 7, and comprising an independent power source (25); and a manual reset control (26) for connecting the independent power source (25) temporarily to respective control terminals (20a, 21a) of the first triac thyristor (20) and second triac thyristor (21).

9. A device as claimed in any one of the foregoing Claims, wherein the predetermined threshold (S_{THN}) is adjustable.

10. An electric household appliance comprising a connecting device as claimed in any one of the foregoing Claims.
